# EUROPÄISCHE PATENTSCHRIFT

(11) **EP 1 514 463 B1**
(45) Veröffentlichungstag und Bekanntmachung des Hinweises auf die Patenterteilung: **15.12.2010**
(21) Anmeldenummer: 04104333.2
(22) Anmeldetag: 08.09.2004
(51) Int. Cl.: A01B 59/06, B60D 1/14

(54) **Vorrichtung zur Kopplung eines Arbeitsgeräts an ein Arbeitsfahrzeug**
Device for coupling a working tool to a vehicle
Dispositif pour attacher un outil à un véhicule

(30) Priorität: 13.09.2003 DE 10342403
(43) Veröffentlichungstag der Anmeldung: 16.03.2005
(73) Patentinhaber: DEERE & COMPANY, Moline, Illinois 61265-8098 (US)
(72) Erfinder: Nordhoff, Hendrik, 48329, Havixbeck (DE)
(74) Vertreter: Holst, Sönke

(56) Entgegenhaltungen:
- EP-A- 1 008 283
- WO-A-82/02814
- DE-A- 4 328 148
- GB-A- 634 487
- GB-A- 1 547 560
- US-A- 3 140 103
- US-A- 3 432 184
- US-A- 4 116 283
- US-A- 4 176 727
- US-A- 5 727 803

## Beschreibung

Die Erfindung betrifft eine Vorrichtung zur Kopplung eines Arbeitsgeräts an ein Arbeitsfahrzeug, mit einem Kopplungsrahmen zur Befestigung des Arbeitsgeräts, zwei Unterlenkern, einem längenverstellbaren Oberlenker und zwei Hubelementen. Die Unterlenker und der Oberlenker sind jeweils mit einem Ende an dem Arbeitsfahrzeug gelenkig anbringbar und jeweils mit dem anderen Ende an dem Kopplungsrahmen gelenkig angebracht. Der Oberlenker ist im Wesentlichen mittig im oberen Bereich des Kopplungsrahmens angeordnet. Die beiden Unterlenker sind im Wesentlichen seitlich im unteren Bereich des Kopplungsrahmens angeordnet. Die Hubelemente sind jeweils mit einem Ende an einem der Unterlenker gelenkig angebracht.

Eine derartige Vorrichtung in Gestalt eines Kopplungsmittels zur Befestigung eines Anbaugeräts an einem Arbeitsfahrzeug geht beispielsweise aus der WO 82/02814 A1 hervor. Das Kopplungsmittel weist zwei starre Unterlenker auf, die einerseits mit dem Arbeitsfahrzeug und andererseits seitlich in einem unteren Bereich eines Kopplungsrahmens gelenkig befestigt sind. Des Weiteren ist ein zwischen dem Arbeitsfahrzeug und dem Kopplungsrahmen verlaufender Oberlenker in Gestalt eines längenverstellbaren Hydraulikzylinders vorhanden. Um eine seitliche Verstellung des Kopplungsrahmens gegenüber dem Arbeitsfahrzeug zu ermöglichen, weist das Kopplungsmittel zwei Hubelemente in Gestalt längenverstellbarer Hydraulikzylinder auf. Jedes der Hubelemente ist einerseits gemeinsam mit dem Oberlenker mittig in einem oberen Bereich des Kopplungsrahmens und andererseits an einem der beiden Unterlenker befestigt. Die mittige Anbringung führt dazu, dass die Torsionssteifigkeit der Vorrichtung in Bezug auf deren Längsachse vergleichsweise gering ist.

Die der Erfindung zugrunde liegende Aufgabe wird darin gesehen, eine Vorrichtung zur Kopplung eines Arbeitsgeräts an ein Arbeitsfahrzeug der eingangs genannten Art anzugeben und weiterzubilden, durch die das vorgenannte Problem überwunden wird.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung zur Kopplung eines Arbeitsgeräts an ein Arbeitsfahrzeug der eingangs genannten Art dadurch gekennzeichnet, dass die Hubelemente jeweils mit dem anderen Ende im Wesentlichen seitlich in einem oberen Bereich des Kopplungsrahmens gelenkig angebracht sind. Hierdurch wird eine erhöhte Torsionssteifigkeit der Vorrichtung in Bezug auf deren Längsachse erreicht.

In einer bevorzugten Ausführungsform sind die Hubelemente im Wesentlichen im vorderen oder mittleren Bereich der Unterlenker anbringbar. Hierdurch können in besonders vorteilhafter Weise konstruktive Probleme umgangen werden, wenn beispielsweise die Hubelemente nicht in der Nähe des arbeitsfahrzeugseitigen Endes der Unterlenker angelenkt werden können, weil die Hubelemente dann an einem Teil des Arbeitsfahrzeuggehäuses anstoßen können.

Die Hubelemente können über eine Hebelarmkonstruktion arbeitsgeräteseitig anbringbar sein. Die Hebelarmkonstruktion kann längenverstellbare Hubzylinder aufweisen, mithilfe derer die Hubelemente über die Hebelarmkonstruktion angehoben bzw. abgesenkt werden können. Da die Hubzylinder der Hebelarmkonstruktion am Arbeitsgerät angeordnet sind, müssen entsprechende Betätigungsleitungen vorgesehen werden, beispielsweise in Form von Leitungen für Hydraulikflüssigkeit, die am Arbeitsfahrzeug beispielsweise an eine Schnellkupplung adaptierbar sind.

In einer bevorzugten Ausführungsform sind die Hubelemente längenverstellbar ausgebildet. Insoweit kann eine Hebelarmkonstruktion nebst Leitungen mit entsprechenden Schnellkupplungen entfallen. Die Hubelemente können beispielsweise in Form von hydraulisch ansteuerbaren doppelseitig wirkenden Zylindern ausgeführt sein. Durch die längenverstellbar ausgeführten Hubelemente kann ein getragenes Arbeitsgerät unmittelbar angehoben oder abgesenkt werden.

Zum einfachen Ankoppeln eines Arbeitsgeräts an das Arbeitsfahrzeug kann der Kopplungsrahmen eine Adaptionsschnittstelle für ein Arbeitsgerät aufweisen. Der Kopplungsrahmen kann beispielsweise in Form eines Schnellkupplungsrahmens ausgeführt sein. Die Adaptionsschnittstelle umfasst vorzugsweise Kopplungsmittel zur Befestigung des Arbeitsgeräts. Diese Kopplungsmittel können beispielsweise durch drei, nach oben geöffnete Haken gebildet sein, die in eine entsprechende, herkömmlich ausgebildete Arbeitsgeräteschnittstelle einhaken.

Vorzugsweise sind die Unterlenker und der Oberlenker mit ihrem arbeitsfahrzeugseitigen Ende unmittelbar am Gehäuse des Arbeitsfahrzeugs angebracht. Bei dem Gehäuse kann es sich um ein Achsgehäuse oder ein Getriebegehäuse, beispielsweise eines Differentialgetriebes, eines Arbeitsfahrzeugs handeln. Bei einem in Form eines herkömmlichen Traktors ausgestalteten Arbeitsfahrzeug können die Unterlenker und der Oberlenker an den Aufnahmen des dort üblicherweise vorgesehenen Dreipunkt-Geräteanbaus angebracht werden, so dass am Traktor selbst keine konstruktiven Veränderungen vorgenommen werden müssen. Alternativ hierzu können die Unterlenker und der Oberlenker an einer am Arbeitsfahrzeug angeordneten Rahmenkonstruktion anbringbar sein, die abnehmbar ausgebildet sein kann. Beispielsweise kann die Rahmenkonstruktion der erfindungsgemäßen Kopplungsvorrichtung selbst an einen herkömmlichen Dreipunkt-Geräteaufbau adaptiert werden. Insoweit ist eine modulare Bauweise der erfindungsgemäßen Vorrichtung möglich, so dass diese in vorteilhafter Weise an bereits bestehende Schnittstellen beispielsweise eines Traktors angepasst werden kann. Hierdurch kann eine Kompatibilität der erfindungsgemäßen Vorrichtung zu einer in der deutschen Norm ISO 730 oder DIN 9674 beschriebenen Gerätekopplung hergestellt werden.

In einer bevorzugten Ausführungsform sind die Unterlenker arbeitsfahrzeugseitig nahe einer Fahrzeugachse anbringbar. Hierdurch wirkt die von einem Arbeitsgerät auf das Arbeitsfahrzeug übertragene Stützlast nahezu unmittelbar auf diese Fahrzeugachse, so dass in vorteilhafter Weise sehr hohe Stützlasten eines Arbeitsgeräts auf das Arbeitsfahrzeug übertragen werden können.

Es besteht die Möglichkeit, dass der Oberlenker und gegebenenfalls die Hubelemente derart ansteuerbar sind, dass die Verteilung des Gewichts des Arbeitsfahrzeugs samt des vom Arbeitsgerät auf das Arbeitsfahrzeug wirkenden Gewichts auf die Arbeitsfahrzeugachsen veränderbar ist. So kann beispielsweise eine auf die Hinterachse eines Arbeitsfahrzeugs wirkende Stützlast von einem Arbeitsgerät in Höhe von ungefähr 300 Kilogramm durch eine entsprechende Druckbeaufschlagung des Oberlenkers - in Abhängigkeit der arbeitsfahrzeugseitigen geometrischen Anordnung der Anlenkstellen des Oberlenkers und der Unterlenker und der damit verbundenen Hebelwirkung - derart verteilt werden, dass 150 Kilogramm der Stützlast auf die Vorderachse und 150 Kilogramm der Stützlast auf die Hinterachse des Arbeitsfahrzeugs wirken.

Insbesondere ist eine auf das Arbeitsfahrzeug im Wesentlichen in vertikaler Richtung wirkende Last im Wesentlichen gleichmäßig oder in einem vorgebbaren Verhältnis auf die Arbeitsfahrzeugachsen verteilbar. Diese Last kann einen positiven oder einen negativen Wert aufweisen, je nachdem, ob die auf das Arbeitsfahrzeug wirkende Kraft des Arbeitsgeräts nach unten oder nach oben gerichtet ist. Eine nach oben gerichtet Kraft kann beispielsweise dann auftreten, wenn das Arbeitsgerät - beispielsweise ein Anhänger - selbst eine Achse mit Rädern aufweist und der bezüglich dieser Achse dem Arbeitsfahrzeug abgewandte Teil des Arbeitsgeräts mehr wiegt als der andere Teil des Arbeitsgeräts.

Die zwei Unterlenker können auf übliche Weise starr ausgebildet sein. In einer bevorzugten Ausführungsform sind diese Unterlenker jedoch längenverstellbar ausgebildet. Hierdurch kann beispielsweise das durch die erfindungsgemäße Kopplungsvorrichtung verbundene Arbeitsgerät in einem von 180 Grad abweichenden Winkel zum Arbeitsfahrzeug ausgerichtet werden, was vielseitige Anwendungen ermöglicht. Dies ist insbesondere dann von Vorteil, wenn an einen Traktor ein Mähwerk mittels einer erfindungsgemäßen Kopplungsvorrichtung angebaut wird, und der von dem Mähwerk überfahrene Bereich in Fahrtrichtung seitlich zu dem vom Traktor überfahrenen Bereich versetzt ist. Auch kann in vorteilhafter Weise eine Kurvenfahrt des Traktors mit einem Arbeitsgerät - und speziell das Wenden - durch längenverstellbare Unterlenker hinsichtlich eines kleineren Wendekreises verbessert werden, da hierdurch ein einer Pendelbewegung entsprechender Pendelausschlag zwischen Arbeitsfahrzeug und Arbeitsgerät möglich ist. In dieser Anordnung ist jedem Zylinder oder Zylinderpaar ein Freiheitsgrad zugeordnet, so dass in vorteilhafter Weise ohne eine aktive Regelfunktion aller längenverstellbarer Elemente auch die volle Funktion einer Geräteschnittstelle im Sinn der deutschen Norm ISO 730 oder DIN 9674 bereitgestellt werden kann.

Bevorzugt ist ein längenverstellbares Querlenkerelement vorgesehen, das mit mindestens einem der zwei Unterlenker zusammenwirkt und schräg zur Fahrzeuglängsrichtung ausgerichtet ist. Mit dem Querlenkerelement können insbesondere Pendelbewegungen zwischen Arbeitsfahrzeug und Arbeitsgerät realisiert werden. Unter einer Pendelbewegung sind im vorliegenden Fall Relativbewegungen zwischen Arbeitsfahrzeug und Arbeitsgerät zu verstehen, die in Betriebsstellung in einer im Wesentlichen horizontalen Richtung erfolgen, wie sie beispielsweise bei einem Gespann aus Traktor und Arbeitsgerät erfolgen, wenn das Gespann einen Slalomparcours durchfährt. Durch das längenverstellbare Querlenkerelement kann somit der Freiheitsgrad der Pendelbewegung passiv oder unmittelbar durch dessen Ansteuerung bewirkt werden. Es sind also zur Bereitstellung einer kontrollierten Pendelbewegung in vorteilhafter Weise nicht mehrere Elemente oder Aktuatoren vorzusehen und anzusteuern.

Ferner kann das Querlenkerelement mit seinem einen Ende an dem einen Unterlenker und mit seinem anderen Ende an dem anderen Unterlenker angelenkt sein. Hierdurch ist das Querlenkerelement sozusagen zwischen den beiden Unterlenkern angeordnet, wodurch in vorteilhafter Weise die erfindungsgemäße Kopplungsvorrichtung platzsparend ausbildbar ist.

Alternativ hierzu kann ein längenverstellbares Querlenkerelement vorgesehen sein, das mit seinem einen Ende arbeitsgeräteseitig und mit seinem anderen Ende entweder an einem der zwei Unterlenker oder arbeitsfahrzeugseitig angelenkt ist. Auch bei diesen Anordnungsformen des Querlenkerelements ist eine platzsparende Konstruktion möglich, da auch hier das Querlenkerelement im Wesentlichen zwischen den zwei Unterlenkern angeordnet ist.

Ein oder beide Enden des Querlenkerelements können auch jeweils im Wesentlichen an der gleichen Stelle oder in unmittelbarer Nähe der Anlenkpunkte der Unterlenker angeordnet sein. Insoweit kann beispielsweise am Arbeitsfahrzeug der Anlenkpunkt des Querlenkerelements mit dem Anlenkpunkt eines Unterlenkers kolokalisiert, d.h. an der gleichen Stelle befindlich, angeordnet sein. Am Arbeitsgerät kann der andere Anlenkpunkt des Querlenkerelements mit dem Anlenkpunkt des anderen Unterlenkers kolokalisiert angeordnet sein. Durch die Anordnung der Enden des Querlenkerelements in unmittelbarer Nähe zu den Unterlenkern wirkt eine Veränderung der Länge des Querlenkerelements nahezu unmittelbar an den entsprechenden Anlenkstellen der Unterlenker. Bei einer konstanten Länge des Querlenkerelements kann durch eine solche Anordnung in vorteilhafter Weise eine Pendelbewegung wirksam verhindert werden.

In einer bevorzugten Ausführungsform sind das Querlenkerelement und die zwei Unterlenker derart angeordnet, dass durch die drei Elemente eine geschlossene kinematische Kette gebildet ist. Es handelt sich hierbei um eine parallel strukturierte Anordnung, deren theoretische Grundlagen in "Kinematik und Robotik" von Manfred Husty, Adolf Karger, Hans Sachs, Waldemar Steinhilper, Springer-Verlag Berlin Heidelberg New York (1997), Seiten 491 - 524, ISBN 3-540-63181 erörtert werden. Eine geschlossene kinematische Kette ist ein Getriebe, bestehend aus Gliedern (Beinen) und Gelenken, bei dem die Kettenendpunkte an einem gemeinsamen Grundkörper angelenkt sind. Im vorliegenden Fall stellen die längenverstellbar ausgebildeten Unterlenker und der Oberlenker die Glieder der kinematischen Kette dar, die Anlenkstellen stellen die Gelenke dar. Eine geschlossene kinematische Kette ist insbesondere hinsichtlich der erzielbaren Freiheitsgrade vorteilhaft.

Insbesondere wenn die Hubelemente mit ihrem einen Ende beispielsweise im mittleren Bereich eines Unterlenkers angreifen, ist bevorzugt vorgesehen, ein am Unterlenker angelenktes Ende des Querlenkerelements mit einem am Unterlenker angelenkten Ende eines Hubelements kolokalisiert oder geringfügig davon beabstandet anzuordnen. Hierdurch greift sowohl das Hubelement als auch das Querlenkerelement im Wesentlichen an der gleichen Stelle des Unterlenkers an.

Nun können ganz allgemein die zwei Unterlenker und/oder die Hubelemente im Wesentlichen parallel, konvergierend oder V-förmig zueinander angeordnet sein. Vorzugsweise ist eine konvergierende Anordnung der Unterlenker vorgesehen, die derart ausgebildet ist, wie es üblicherweise bei den Unterlenkern eines Dreipunkt-Geräteanbaus der Fall ist. Hierbei ist vorgesehen, dass die Anlenkstellen der Unterlenker arbeitsgeräteseitig weiter voneinander beabstandet sind, als das arbeitsfahrzeugseitig der Fall ist.

Ferner kann ein längenverstellbares Element einen Zylinder aufweisen, der vorzugsweise hydraulisch ansteuerbar ist. Insbesondere kann dieser Zylinder doppelseitig wirkend ausgebildet sein, so dass ein solcher Zylinder sowohl Schub- als auch Zugkräfte ausüben bzw. übertragen kann. Einen hydraulisch ansteuerbaren Zylinder für eine erfindungsgemäße Kopplungsvorrichtung vorzusehen und beispielsweise an einen Traktor zu adaptieren, ist mit geringem Zusatzaufwand möglich, da ein Traktor üblicherweise für andere hydraulisch betriebene Aktuatoren sowieso schon die entsprechenden Aggregate aufweist, z.B. eine Hydraulikpumpe, Leitungen und Anschlussstücke.

Es ist möglich, dass ein längenverstellbares Element ein Wegmesssystem und/oder einen Drucksensor und/oder einen Kraftsensor aufweist. Durch das Ausstatten der längenverstellbaren Elemente mit einem Wegmesssystem ist einer dem Wegmesssystem zugeordneten Steuereinheit stets die Relativposition zwischen Arbeitsfahrzeug und Arbeitsgerät bekannt, was für die Ansteuerung der Kopplungsvorrichtung für einige Applikationen eine Voraussetzung darstellen kann. Falls die längenverstellbaren Elemente mit jeweils einem Drucksensor bzw. einem Kraftsensor ausgestattet sind, können hierdurch Dämpfungen zwischen Arbeitsfahrzeug und Arbeitsgerät realisiert werden, was bei einem Traktor mit einem Arbeitsgerät in vorteilhafter Weise zu einem verbesserten Fahrkomfort führt.

Die erfindungsgemäße Kopplungsvorrichtung ist insbesondere dann vielseitig einsetzbar, wenn mindestens ein Ende eines Unterlenkers, eines Oberlenkers, eines Hubelements und/oder eines Querlenkerelements eine gelenkige Kopplung aufweist, durch die eine Relativbewegung in mindestens zwei Freiheitsgraden möglich ist. Wenn jedes Ende eines Unterlenkers, eines Hubelements bzw. des Querlenkerelements eine solche gelenkige Kopplung aufweist, ist eine nahezu uneingeschränkte Relativpositionierung zwischen Arbeitsgerät und Arbeitsfahrzeug möglich. Die gelenkige Kopplung kann vorzugsweise ein Kreuzgelenk oder ein Kugelgelenk aufweisen.

Des Weiteren ist es denkbar, dass die zwei Unterlenker längenverstellbar ausgebildet sind. Die längenverstellbaren Unterlenker, die längenverstellbaren Hubelemente, der längenverstellbare Oberlenker und/oder das längenverstellbare Querlenkerelement werden derart angesteuert, dass ein auf das Arbeitsfahrzeug wirkender Zugpunkt des Arbeitsgeräts in seiner räumlichen Lage zum Arbeitsfahrzeug veränderbar ist. Unter dem auf das Arbeitsfahrzeug wirkenden Zugpunkt ist insbesondere der Schnittpunkt der Verlängerung der Unterlenker und des Oberlenkers der Vorrichtung zu verstehen. Sobald eines dieser drei Elemente in seiner Länge verstellt wird, ändert sich auch der Schnittpunkt deren Verlängerung und somit die räumliche Lage des Zugpunkts, vorausgesetzt, dass diese Elemente derart angeordnet sind, dass deren Verlängerungen einen gemeinsamen Schnittpunkt ergeben. Wird die arbeitsgeräteseitige Koppelebene beim Ausschwenken durch eine Regelung der Länge der längenverstellbaren Elemente auf einer Kreisbahn um einen Zugpunkt geführt, braucht der Zugpunkt nicht im Schnittpunkt der verlängerten Wirklinien der Unterlenker und des Oberlenkers zu liegen. Der Zugpunkt kann bezüglich seiner räumlichen Lage frei gewählt werden. Der Zugpunkt bei einem Gespann, bestehend aus einem Traktor und einem Arbeitsgerät liegt üblicherweise zwischen der Vorderachse und der Hinterachse des Traktors. Die relative Lage des Zugpunkts des Arbeitsgeräts zum Arbeitsfahrzeug ist insbesondere für die Krafteinleitung des Arbeitsgeräts auf das Fahrzeug relevant. Eine entsprechende Ansteuerung der längenverstellbaren Elemente ermöglicht daher eine Verlagerung des Zugpunkts, so dass in vorteilhafter Weise eine optimale Krafteinleitung des Arbeitsgeräts auf das Arbeitsfahrzeug erzielt werden kann.

Der Zugpunkt entsteht, wenn das Arbeitsgerät bei Relativbewegungen zum Arbeitsfahrzeug um einen Punkt kreist. Werden diese Kreisbahnen durch entsprechende Ansteuerung der längenverstellbaren Elemente verändert, so kann der Zugpunkt unabhängig vom geometrischen Aufbau verändert werden. Dementsprechend kann eine räumliche Lageveränderung des Zugpunkts in im Wesentlichen vertikaler und/oder horizontaler Richtung durch Ansteuerung mindestens eines längenverstellbaren Elements dadurch erreicht werden, dass das Arbeitsgerät auf einer Kreisbahn, die durch die Ansteuerung der längenverstellbaren Elemente variierbar ist, in der vertikalen und/oder horizontalen Ebene frei um den Zugpunkt pendeln kann. Werden beide Bewegungen überlagert, pendelt das Arbeitsgerät frei auf einer sphärischen Bahn um den Zugpunkt, wodurch in vorteilhafter Weise eine Vielzahl zusätzlicher Betriebsmodi realisierbar ist.

In einer bevorzugten Ausführungsform ist durch eine Drucklosschaltung mindestens eines einzelnen längenverstellbaren Elements eine Schwimmstellung und/oder eine Pendelbewegung zwischen dem Arbeitsfahrzeug und dem Arbeitsgerät erzielbar. Eine Schwimmstellung während des Betriebs liegt insbesondere dann vor, wenn sich ein getragenes Arbeitsgerät in seiner vertikalen Bewegung im Wesentlichen einer Unebenheit des Untergrunds anpasst. Eine Pendelbewegung ist zwischen Arbeitsgerät und Arbeitsfahrzeug üblicherweise bei einem herkömmlichen Dreipunkt-Geräteanbau lediglich begrenzt möglich, da die Unterlenker und der Oberlenker nur in einem gewissen Bereich ausgelenkt werden können, was eine Pendelbewegung zwischen Fahrzeug und Arbeitsgerät erlaubt.

Falls nun das längenverstellbare Querlenkerelement drucklos geschaltet wird, ist eine seitliche Pendelbewegung zwischen dem Arbeitsfahrzeug und dem Arbeitsgerät realisierbar. Unter einer Drucklosschaltung ist am Beispiel eines Hydraulikzylinders zu verstehen, dass sein Kolben sich frei bewegen kann und hierzu die Zylinderkammern mit dem Sumpf verbunden sein können.

Weiterhin kann auch der Oberlenker drucklos geschaltet werden, was eine Verkippung um eine horizontale Achse zwischen dem Arbeitsfahrzeug und dem Arbeitsgerät ermöglicht. Dies ist insbesondere dann möglich, wenn es sich um ein gezogenes Arbeitsgerät handelt.

Mit einer Drucklosschaltung und/oder mit einer geeigneten Verbindung der Hydraulikkammern der Hubelemente ist eine Aufnahme von Stützlasten und/oder eine Verdrehung um die Arbeitsfahrzeuglängsachse realisierbar. Eine Verdrehung des Arbeitsgeräts relativ zum Arbeitsfahrzeug um die Arbeitsfahrzeuglängsachse kann auch durch eine aktive Ansteuerung der Hubelemente realisiert werden.

Es kann mindestens eine Verbindungsleitung vorgesehen sein, mit der die Kolbenkammern mindestens zweier Zylinder verbindbar sind. Bei einer solchen Verbindungsleitung handelt es sich vorzugsweise um eine direkte Verbindung zwischen mindestens zwei Zylindern, die zwar Mehrkosten durch das Vorsehen der Verbindungsleitung verursacht, die jedoch die Ausgestaltung der zur Ansteuerung sämtlicher längenverstellbarer Elemente erforderlichen Ventile insgesamt vereinfachen kann.

Die Verbindungsleitung kann mindestens ein Ventil aufweisen, mit dem eine Verbindung der Kolbenkammern der Zylinder herstellbar oder unterbrechbar ist. Im einfachsten Fall können die zwei Kolbenkammern eines Zylinders durch jeweils eine Verbindungsleitung mit den zwei Kolbenkammern eines zweiten Zylinders verbunden werden. Die zwei Verbindungsleitungen können ein 4/2-Wegventil aufweisen, das in der ersten Stellung beide Verbindungsleitungen unterbricht und in der zweiten Stellung beide Verbindungsleitungen miteinander verbindet. Hierdurch kann in vorteilhafter Weise eine Verbindung mit den einzelnen Kolbenkammern der Zylinder erreicht werden, ohne dass eine aufwendige hydraulische Gesamtsteuerung der längenverstellbaren Elemente erforderlich ist.

Durch aktive Ansteuerung einzelner längenverstellbarer Elemente kann zudem eine auf den jeweiligen Betriebsmodus des Arbeitsfahrzeugs und des Arbeitsgeräts abgestimmte Relativpositionierung zwischen Arbeitsfahrzeug und Arbeitsgerät eingestellt werden. Letztendlich können alle längenverstellbaren Elemente aktiv angesteuert werden, um so eine spezielle Relativpositionierung zwischen Arbeitsfahrzeug und Arbeitsgerät zu realisieren.

Dies kann beispielsweise den seitlichen Versatz des von einem Mähwerk überfahrenen Bereichs in Fahrtrichtung zu einem von einem Traktor überfahrenen Bereich umfassen.

Weitere Beispiele für funktionelle Möglichkeiten bzw. vorteilhafte Eigenschaften der erfindungsgemäßen Kopplungsvorrichtung sind:
- eine Dämpfung von Erregungsfrequenzen und Kraftstößen auch bei gezogenen Geräten,
- eine geregelte Gewichtsverlagerung des Arbeitsgeräts auf das Arbeitsfahrzeug,
- ein Abdriftausgleich am Hang,
- ein Neigungsausgleich oder eine Schlaglochdämpfung,
- ein stabileres Fahrverhalten von Arbeitsgerät und Arbeitsfahrzeug durch Vorspannung der erfindungsgemäßen Kopplungsvorrichtung.

Insbesondere für angehängte Arbeitsgeräte ergibt sich in vorteilhafter Weise eine Krafteinleitung in das Arbeitsfahrzeug, die im Wesentlichen nur durch die arbeitsfahrzeugseitigen Anlenkpunkte der Unterlenker in der Nähe der Arbeitsfahrzeugachse realisiert wird. Der längenverstellbare Oberlenker kann einen Freiheitsgrad um die Arbeitsfahrzeugquerachse - betreffend Kippbewegungen zwischen Arbeitsfahrzeug und Arbeitsgerät - dämpfen, wodurch ein "Power Hop" vermieden werden kann. Weiterhin kann durch den längenverstellbaren Oberlenker die Achslastverteilung des Arbeitsfahrzeugs beeinflusst werden. Durch den weit hinter dem Arbeitsfahrzeug liegenden Drehpunkt kann ein großer Einschlagwinkel zwischen Arbeitsfahrzeug und Arbeitsgerät realisiert werden.

Weiterhin kann eine der jeweiligen Situation angepasste Regelung erfolgen, bei der beispielsweise beim Wenden des Gespanns am Ende eines Felds das Arbeitsgerät nicht angehoben werden muss und trotzdem ein kleiner Wendekreis erzielt werden kann. Ein weiteres Beispiel betrifft die Höhenregelung eines in Form eines Pflugs ausgeführten Arbeitsgeräts.

Die erfindungsgemäße Kopplungsvorrichtung realisiert in besonders vorteilhafter Weise neben der Funktion eines herkömmlichen Dreipunkt-Geräteanbaus alle rotatorischen Freiheitsgrade um die x-, y- und z-Achse. So ist insbesondere ein Parallelaushub eines Arbeitsgeräts, ein Zapfwellenbeugewinkelmanagement und eine größere Hubkraft realisierbar.

Es sei noch angemerkt, dass aufgrund der erfindungsgemäßen Anordnung der längenverstellbaren Elemente in vorteilhafter Weise jedem längenverstellbaren Element ein bestimmter Freiheitsgrad der Relativbewegung zwischen Arbeitsfahrzeug und Arbeitsgerät zukommt, d.h. durch die Ansteuerung eines längenverstellbaren Elements wird ein zugehöriger Freiheitsgrad angesteuert. Hierdurch wird die Ansteuerung der längenverstellbaren Elemente erheblich vereinfacht, was letztendlich die gesamten Produktionskosten der erfindungsgemäßen Kopplungsvorrichtung reduziert.

In einer weiteren Ausführungsform ist durch Kopplung der zwei längenverstellbaren Unterlenker eine Drehbewegung zwischen dem Arbeitsfahrzeug und dem Arbeitsgerät realisierbar. Unter einer Kopplung ist insbesondere eine gekreuzte Verbindung der Zylinderkammern zu verstehen, woraus eine entgegengesetzte Kolbenbewegung der beiden Zylinder resultiert. Mit einer solchen Kopplung der zwei längenverstellbaren Unterlenker kann in vorteilhafter Weise eine engere Kurvenfahrt oder ein kleinerer Wendekreis erzielt werden, da um den Betrag, um den sich der eine Unterlenker verkürzt, sich der andere Unterlenker verlängert. Das gleiche Prinzip ermöglicht es, den beiden Hubelementen den Freiheitsgrad um die Traktorlängsachse zu realisieren, und gleichzeitig die vom Arbeitsgerät aufgebrachte Stützlast aufzunehmen.

Weiterhin können die Kolbenkammern der Hubelemente mit der Kolbenkammer des Oberlenkers gekoppelt werden. Hierdurch kann eine Vorderachsbelastung in Abhängigkeit von der Stützlast des Arbeitsgeräts erzielt werden. Weiterhin wird die die Fahrdynamik unterstützende Wirkung dieser Schaltung durch ein zugeschaltetes Feder- bzw. Dämpferelement weiter unterstützt.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Erläuterung der bevorzugten Ausführungsbeispiele der Erfindung anhand der Zeichnung verwiesen. Es zeigen:
- Fig. 1: eine schematische Darstellung eines ersten Ausfüh- rungsbeispiels der vorliegenden Erfindung in einer perspektivischen, dreidimensionalen Ansicht,
- Fig. 2: eine schematische Darstellung des Ausführungsbei- spiels aus Fig. 1, wobei der arbeitsgeräteseitige Kopplungsrahmen zu dem in Fig. 1 dargestellten abwei- chend ausgebildet ist,
- Fig.3: eine schematische Darstellung eines ersten Ausfüh- rungsbeispiels eines Hydraulikschaltplans zur Ansteu- erung von vier längenverstellbaren Elementen einer erfindungsgemäßen Kopplungsvorrichtung,
- Fig. 4: eine schematische Darstellung eines zweiten Ausfüh- rungsbeispiels eines Hydraulikschaltplans zur Ansteu- erung von vier längenverstellbaren Elementen einer erfindungsgemäßen Kopplungsvorrichtung,
- Fig. 5: eine schematische Darstellung eines dritten Ausfüh- rungsbeispiels eines Hydraulikschaltplans zur Ansteu- erung von vier längenverstellbaren Elementen einer erfindungsgemäßen Kopplungsvorrichtung,
- Fig. 6: eine schematische Darstellung eines Arbeitsgeräts in der Aufsicht, das an ein Arbeitsfahrzeug über eine erfindungsgemäße Kopplungsvorrichtung gekoppelt ist, wobei das Arbeitsfahrzeug eine Kurvenfahrt ausführt,
- Fig. 7: eine schematische Darstellung eines Arbeitsgeräts in der Aufsicht, das an ein Arbeitsfahrzeug über eine erfindungsgemäße Kopplungsvorrichtung gekoppelt ist, wobei das Arbeitsfahrzeug eine Kurvenfahrt ausführt,
- Fig. 8: eine schematische Darstellung eines Arbeitsgeräts in der Aufsicht, das an ein Arbeitsfahrzeug über eine erfindungsgemäße Kopplungsvorrichtung gekoppelt ist, wobei das Arbeitsgerät seitlich versetzt zum Arbeits- fahrzeug positioniert ist, und
- Fig. 9: eine schematische Darstellung eines Arbeitsgeräts in der Seitenansicht, das an ein Arbeitsfahrzeug über eine erfindungsgemäße Kopplungsvorrichtung gekoppelt ist.

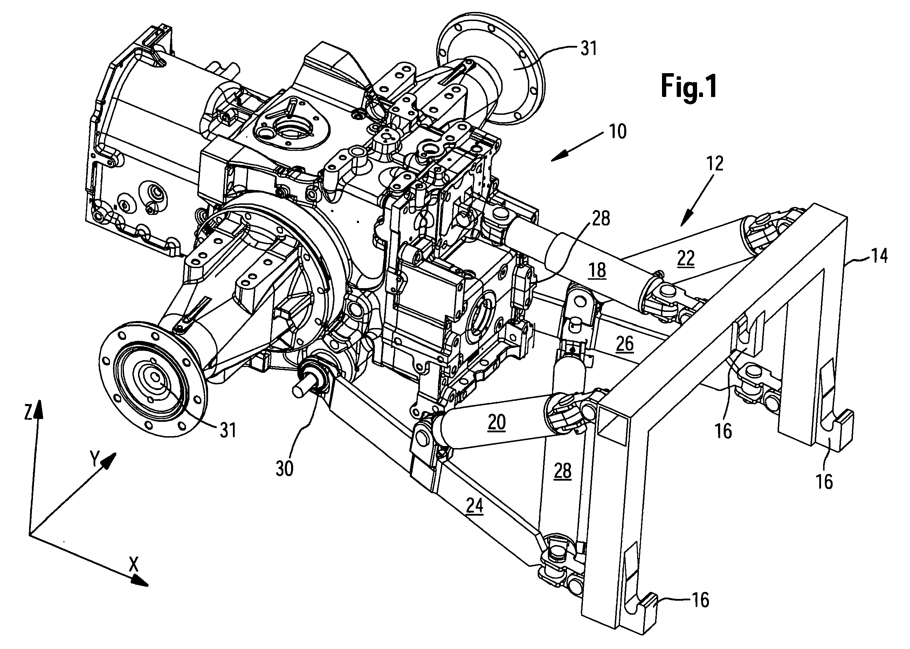

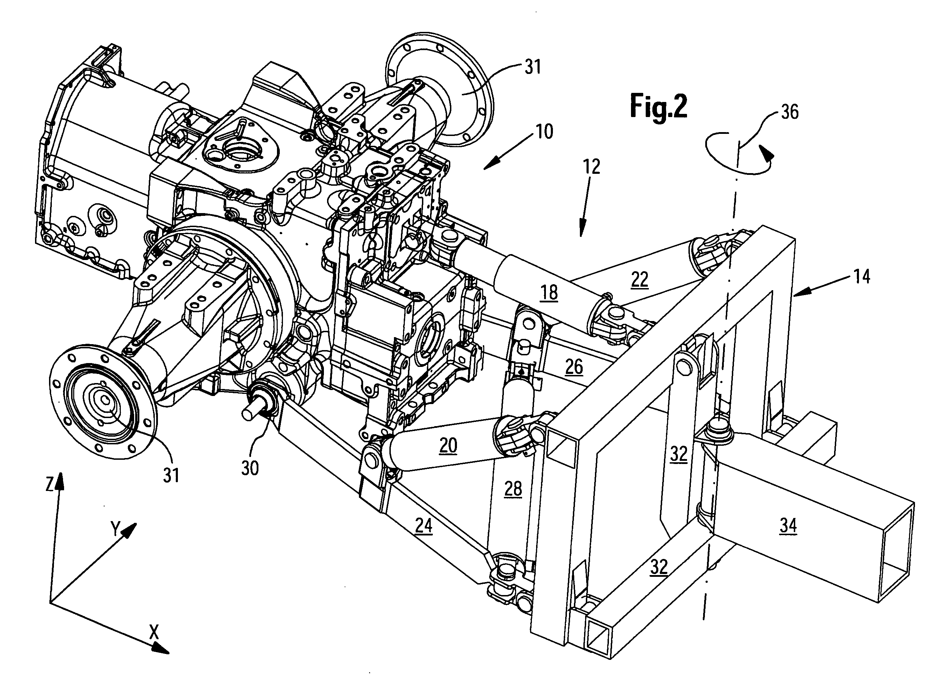

In den Figuren sind gleiche oder gleichartige Bauteile mit den selben Bezugszeichen belegt. In Fig. 1 und 2 ist ein Achsgehäuse 10 eines nicht weiter gezeigten Arbeitsfahrzeugs gezeigt, an das eine erfindungsgemäße Kopplungsvorrichtung 12 adaptiert ist. Das in Fig. 1 und 2 gezeigte Achsgehäuse 10 ist ein Teil eines Traktors. An den Traktor ist über die erfindungsgemäße Kopplungsvorrichtung 12 ein Arbeitsgerät adaptierbar, das ebenfalls in Fig. 1 nicht gezeigt ist. Das Arbeitsgerät wird unter anderem an einen Kopplungsrahmen 14 über als nach oben offene Haken ausgebildete Kopplungsmittel 16 adaptiert. Durch den Kopplungsrahmen 14 mit seinen Kopplungsmitteln 16 wird die Funktion eines herkömmlichen Dreipunkt-Geräteanbaus bereitgestellt. Der Kopplungsrahmen 14 dient durch die Ausgestaltung mit den Kopplungsmitteln 16 als Adaptionsschnittstelle für ein Arbeitsgerät.

Die Kopplungsvorrichtung 12 umfasst einen längenverstellbaren Oberlenker 18, zwei Hubelemente 20, 22 sowie zwei Unterlenker 24, 26. Der Oberlenker 18 ermöglicht unter anderem die Ausführung von Kippbewegungen zwischen dem Arbeitsfahrzeug und dem Arbeitsgerät. Die zwei Unterlenker 24, 26 dienen in erster Linie zur Übertragung von Zug- oder Schubkräften. Die zwei Hubelemente 20, 22 dienen hauptsächlich zur Ausführung von Hubbewegungen. Der Oberlenker 18 und die zwei Unterlenker 24, 26 sind mit ihrem ersten Ende jeweils gelenkig arbeitsfahrzeugseitig anbringbar. Mit ihrem anderen Ende sind sie jeweils gelenkig am Kopplungsrahmen 14 anbringbar. Der Oberlenker 18 ist mittig im oberen Bereich der Kopplungsvorrichtung 12 angeordnet. Die zwei Unterlenker 24, 26 sind seitlich im unteren Bereich der Kopplungsvorrichtung 12 angeordnet. Die Hubelemente 20, 22 sind jeweils mit einem Ende im mittleren Bereich der Unterlenker 24, 26 gelenkig anbringbar.

Bei der erfindungsgemäßen Kopplungsvorrichtung 12 sind die Hubelemente 20, 22 mit dem anderen Ende arbeitsgeräteseitig in einem oberen Bereich der Kopplungsvorrichtung 12 gelenkig anbringbar, und zwar in den Ausführungsbeispielen gemäß Fig. 1 und 2 am oberen Bereich des Kopplungsrahmens 14.

Die Anlenkpunkte 30 der Unterlenker 24, 26 sind nahe an der hinteren Fahrzeugachse 31 des Traktors angeordnet, und zwar am Differentialgehäuse 10 des Arbeitsfahrzeugs. Dies führt insbesondere bei der Übertragung von Stützlasten des Arbeitsgeräts auf das Arbeitsfahrzeug zu fast keiner Hebelwirkung, so dass in vorteilhafter Weise keine Entlastung der Vorderachse des Arbeitsfahrzeugs auf Grund der vom Arbeitsgerät auf das Arbeitsfahrzeug wirkenden Stützlast erfolgt.

Es ist ein längenverstellbares Querlenkerelement 28 vorgesehen, das mit dem Unterlenker 26 zusammenwirkt. Das Querlenkerelement 28 ist mit seinem einen Ende in einem mittleren Bereich eines Unterlenkers 26 und mit seinem anderen Ende an dem Kopplungsrahmen 14 angelenkt, und zwar dort, wo auch der andere Unterlenker 24 angelenkt ist. Somit wirkt eine vom Querlenkerelement 28 eingeleitete Zug- oder Schubkraft arbeitsgeräteseitig nahezu an der gleichen Stelle des Kopplungsrahmens 14, wie beispielsweise eine vom Unterlenker 24 auf das Arbeitsgerät übertragene Zugkraft. Mit dem Querlenkerelement 28 kann eine seitliche Pendelbewegung zwischen Arbeitsfahrzeug und Arbeitsgerät erzielt bzw. gesteuert werden.

Das am Unterlenker 26 angelenkte Ende des Querlenkerelements 28 ist mit seiner Anlenkstelle geringfügig von der Anlenkstelle des Hubelements 22 am Unterlenker 26 beabstandet angeordnet. Die Hubelemente 20, 22 sind im mittleren Bereich der Unterlenker 24, 26 angebracht. Die Hubelemente 20, 22 sind längenverstellbar ausgebildet.

Somit realisiert die erfindungsgemäße Kopplungsvorrichtung 12 passive Freiheitsgrade um die in Fig. 1 mit den Koordinatenachsen angedeutete y-Achse, indem der längenverstellbare Oberlenker 18 entsprechend angesteuert bzw. drucklos geschaltet wird. Es handelt sich hierbei um Kippbewegungen zwischen dem Arbeitsfahrzeug und dem Arbeitsgerät. Durch entsprechendes Ansteuern der Hubelemente 20, 22 ist ein passives Verdrehen des Arbeitsgeräts relativ zum Arbeitsfahrzeug um die x-Achse möglich, so dass die erfindungsgemäße Kopplungsvorrichtung 12 in vorteilhafter Weise auch einen diesbezüglichen Freiheitsgrad zur Verfügung stellen kann. Die in Fig. 1 eingezeichnete x-Achse ist parallel zur Längsachse der Kopplungsvorrichtung 12 und zur Arbeitsfahrzeuglängsachse angeordnet.

Die zwei Unterlenker 24, 26 und die Hubelemente 20, 22 sind leicht konvergierend zueinander angeordnet, und zwar derart, dass die arbeitsfahrzeugseitig angeordneten Enden der Unterlenker 24, 26 näher beieinander liegen als die kopplungsrahmenseitig angeordneten Enden der Unterlenker 24, 26. Dementsprechend liegt der Konvergenzpunkt der Unterlenker 24, 26 ungefähr in der Traktormitte.

Fig. 2 zeigt eine Abwandlung des Ausführungsbeispiels aus Fig. 1, wobei lediglich schematisch angedeutet ist, dass am Kopplungsrahmen 14 ein in Fig. 2 nicht gezeigtes Arbeitsgerät angekoppelt ist. Bei dem Arbeitsgerät handelt es sich um einen gezogenen Anhänger, wobei lediglich der dem Kopplungsrahmen 14 zugeordnete Teil des Arbeitsgeräts in Fig. 2 eingezeichnet ist. So umfasst dieser Teil einen Rahmen 32, der in die Kopplungsmittel 16 des Kopplungsrahmens 14 eingehängt und fixiert ist. Das arbeitsfahrzeugseitige Ende des Rahmens 32 ist mit der Deichsel 34 des Anhängers derart befestigt, dass die Deichsel 34 sich um die Achse 36 drehen kann, wobei die Achse 36 in Betriebsstellung vertikal bzw. parallel zur z-Achse angeordnet ist. Somit wird der Freiheitsgrad einer Relativbewegung zwischen Arbeitsfahrzeug und Arbeitsgerät um die z-Achse passiv vom Arbeitsgerät zur Verfügung gestellt.

Bei den in Fig. 1 und 2 gezeigten Anlenkstellen der Unterlenker 24, 26, des Oberlenkers 18 und der Hubelemente 20, 22 handelt es sich jeweils um eine gelenkige Kopplung, durch die eine Relativbewegung in mindestens zwei Freiheitsgrade möglich ist. Eine solche gelenkige Kopplung ist in Form eines Kreuzgelenks oder eines Kugelgelenks ausgeführt. In Fig. 1 und 2 haben die arbeitsfahrzeugseitigen Anlenkstellen der Unterlenker 24, 26 drei rotatorische Freiheitsgrade.

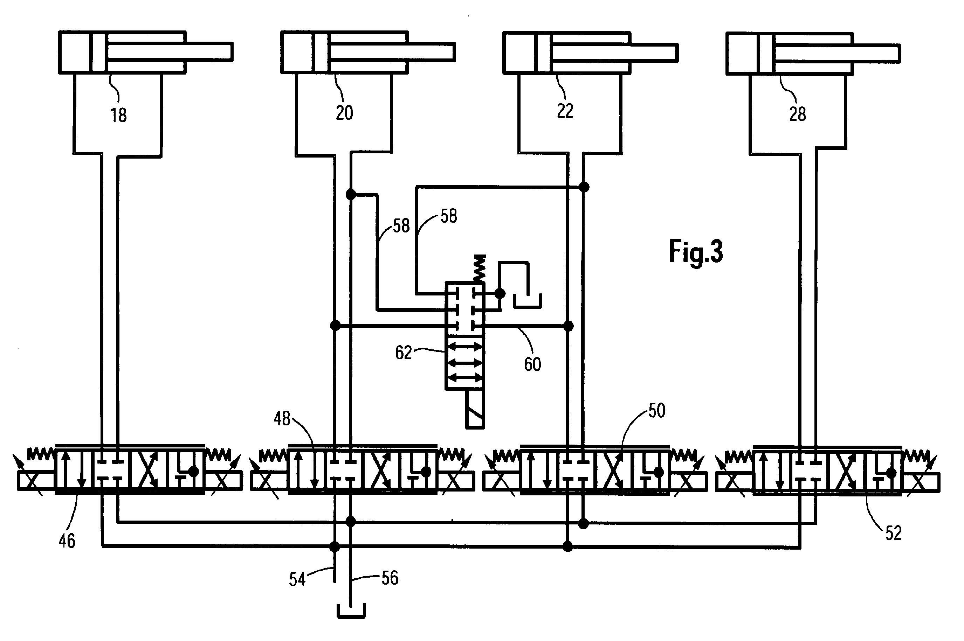

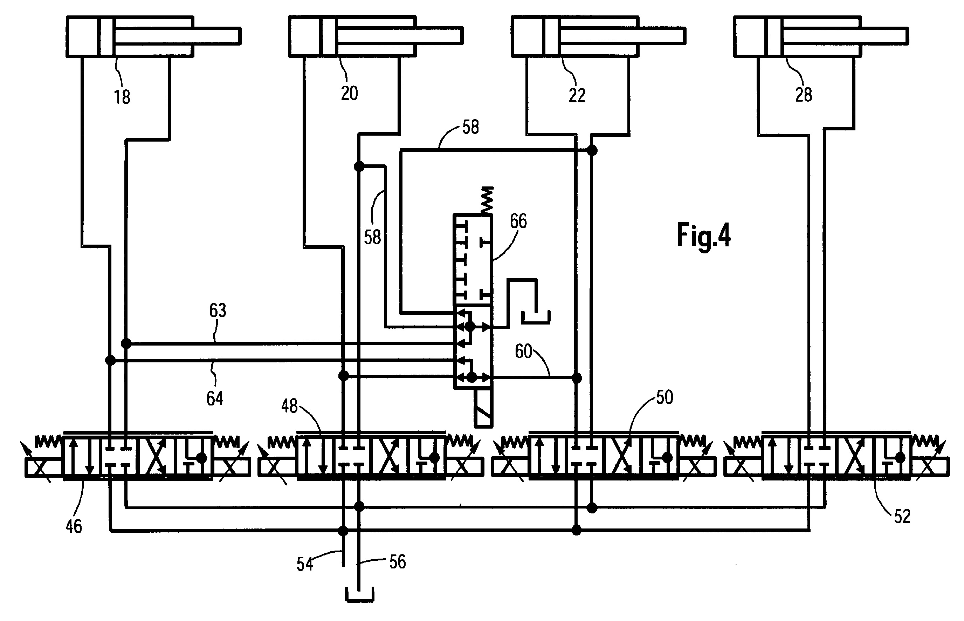

Fig. 3 und 4 zeigen jeweils in einer schematischen Darstellung einen Hydraulikschaltplan, gemäß dem der längenverstellbare Oberlenker 18, die längenverstellbaren Hubelemente 20, 22 und das Querlenkerelement 28 angesteuert werden. Die längenverstellbaren Elemente 18, 20, 22 und 28, die den in Fig. 1 und 2 gezeigten längenverstellbaren Elementen entsprechen, sind in Form von hydraulischen Zylindern ausgebildet, die doppelseitig wirken.

Fig. 3 zeigt einen starren Betriebszustand der längenverstellbaren Elemente 18, 20, 22 und 28, da aufgrund der eingezeichneten Stellung der vier 4/4-Wegventile 46, 48, 50 und 52 sowohl zur Druckleitung 54 als auch zur Sumpfleitung 56 keine Verbindung zu den längenverstellbaren Elementen 18, 20, 22, 28 besteht. Auch die einzelnen Zylinderkammern der längenverstellbaren Elemente 18, 20, 22, 28 sind in dieser Ventilstellung bezüglich der vier 4/4-Wegventile 46, 48, 50 und 52 voneinander getrennt.

Das 4/4-Wegventil 46 ist hierbei dem längenverstellbaren Oberlenker 18, das 4/4-Wegventil 48 dem längenverstellbaren Hubelement 20, das 4/4-Wegventil 50 dem längenverstellbaren Hubelement 22 und das 4/4-Wegventil 52 dem längenverstellbaren Querlenkerelement 28 zugeordnet. Falls die erste Schaltstellung von links eines 4/4-Wegventils 46, 48, 50 oder 52 aktiviert ist, wird der Kolben des entsprechenden Zylinders ausgefahren. Dementsprechend wird der Kolben eines Zylinders eingefahren, wenn die dritte Schalterstellung von links eines 4/4-Wegventils 46, 48, 50 oder 52 aktiviert ist. Ist die vierte Schalterstellung von links eines 4/4-Wegventils 46, 48, 50 oder 52 aktiviert, so ist der entsprechende Zylinder drucklos geschaltet.

In Fig. 3 sind zwei Verbindungsleitungen 58, 60 vorgesehen, mit denen die Kolbenkammern der zwei Hubelemente 20, 22 miteinander verbunden werden können. Durch die Verbindung der Kolbenkammern der Hubelemente 20, 22 ist beispielsweise eine Verdrehung des Arbeitsgeräts um die Arbeitsfahrzeuglängsachse realisierbar. In den Verbindungsleitungen ist ein 6/2-Wegventil 62 vorgesehen, mit dem eine Verbindung der Kolbenkammern der Hubelemente 20, 22 herstellbar oder unterbrechbar ist. In der in Fig. 3 gezeigten Stellung des 6/2-Wegventils 62 sind die kolben- und kolbenstangenseitigen Kammern der Zylinder der Hubelemente 20, 22 voneinander getrennt, d.h. die Verbindungsleitungen 58, 60 sind unterbrochen. Durch die beiden Verbindungsleitungen 58, 60 können die Kolbenkammern der beiden Hubelemente 20, 22 unmittelbar und passiv miteinander verbunden werden, und zwar dadurch, dass das 6/2-Wegventil 62 in seine obere Stellung gebracht wird. Hierdurch kann das Arbeitsfahrzeug relativ zum Arbeitsgerät in vorteilhafter Weise um die Arbeitsfahrzeuglängsachse verdreht werden, ohne jedoch aktiv geregelt werden zu müssen, wobei das Arbeitsfahrzeug dennoch Stützlasten des Arbeitsgeräts aufnehmen kann.

Fig. 4 zeigt einen gegenüber Fig. 3 abgewandelten Hydraulikschaltplan zur Ansteuerung der vier längenverstellbaren Elemente 18, 20, 22 und 28. Hierbei sind gleichartige Bauteile mit den selben Bezugszeichen gekennzeichnet. Zusätzlich zu den zwei Verbindungsleitungen 58, 60 sind zwei weitere Verbindungsleitungen 63 und 64 vorgesehen, die eine Verbindung der Kolbenkammern der Zylinder der längenverstellbaren Elemente 18, 20 und 22 ermöglichen. Den Verbindungsleitungen 58, 60, 63 und 64 ist ein 7/2-Wegventil 66 zugeordnet, das in einer Stellung die Verbindung der einzelnen Kolbenkammern unterbricht. In der in Fig. 4 gezeigten Stellung des 7/2-Wegventils 66 sind die kolbenstempelseitigen Kammern der Hubelemente 20, 22 und des Oberlenkers 18 miteinander verbunden, die kolbenstangenseitigen Kammern der Hubelemente 20, 22 und des Oberlenkers 18 sind drucklos mit dem Sumpf 68 verbunden. In diesem Zustand kann in vorteilhafter Weise eine Dämpfung für gezogene Arbeitsgeräte erzielt werden, wobei auch eine Gewichtsübertragung auf die Vorderachse möglich ist. Es ist auch denkbar, die eine oder die andere Kammer eines Zylinders eines längenverstellbaren Elements 18, 20, 22 und/oder 28 über ein in Fig. 3 und 4 nicht gezeigtes zusätzlich vorgesehenes Ventil nebst Hydraulikleitung mit einem ebenfalls in Fig. 3 und 4 nicht gezeigten Druckspeicher zu verbinden. Hierdurch kann der entsprechende Zylinder Relativbewegungen zwischen Arbeitsfahrzeug und Arbeitsgerät dämpfen, was in vorteilhafter Weise den Fahrkomfort verbessert.

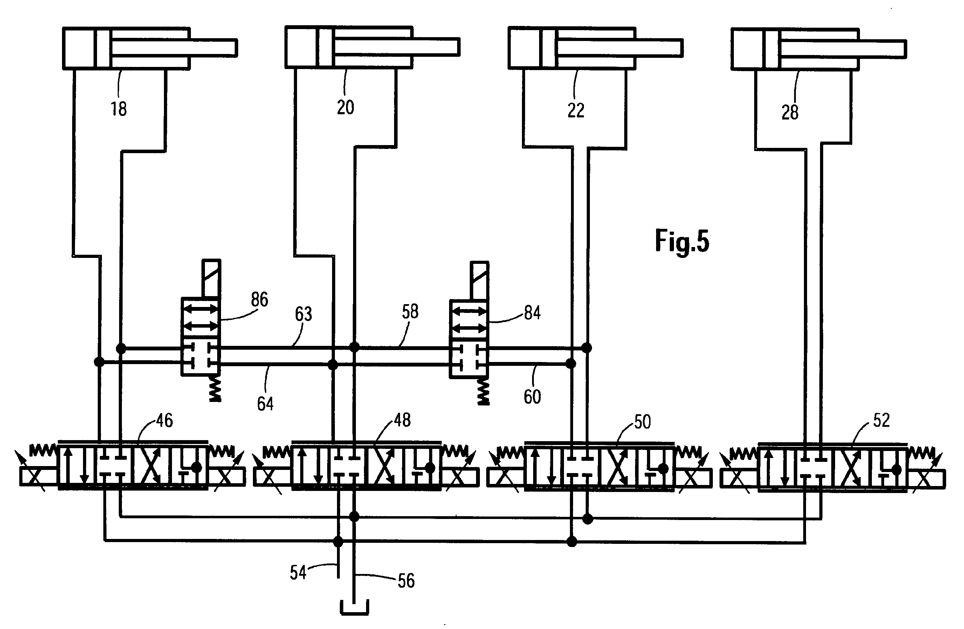

Fig. 5 zeigt einen zu Fig. 3 und 4 abgewandelten Hydraulikschaltplan zur Ansteuerung der vier längenverstellbaren Elemente 18, 20, 22 und 28. Hier sind gleichartige Bauteile mit den selben Bezugszeichen gekennzeichnet. Die Kolbenkammern der beiden Hubelemente 20, 22 können mit dem 4/2-Wegventil 84 über die beiden Verbindungsleitungen 58, 60 miteinander verbunden bzw. voneinander getrennt werden. Weiterhin sind die Verbindungsleitungen 63, 64 zum Oberlenker 18 durch das Ventil 86 verbindbar bzw. unterbrechbar. Somit ist es gemäß dem Hydraulikschaltplan aus Fig. 5 möglich, lediglich die beiden Hubelemente 20, 22 miteinander zu verbinden, die Kolbenkammern des Oberlenkers 18 jedoch nicht mit den zwei Hubelementen 20, 22 zu verbinden. Wenn die zwei Ventile 84, 86 in ihre jeweils untere Stellung verbracht werden, sind die Kolbenkammern des Oberlenkers 18 und der zwei Hubelemente 20, 22 miteinander verbunden.

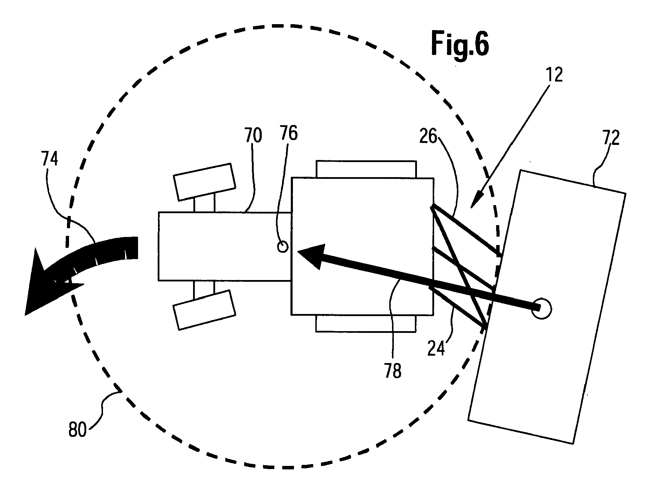

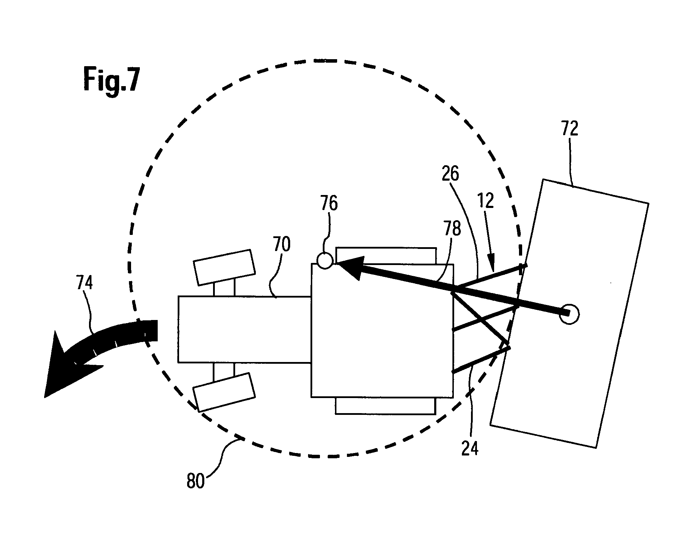

Fig. 6 und 7 zeigen jeweils ein Gespann, bestehend aus einem Traktor 70 und einem Arbeitsgerät 72, das sich in einer Kurvenfahrt befindet, wobei die Fahrtrichtung durch den Pfeil 74 angedeutet ist. Die zwei Unterlenker 24, 26 der Kopplungsvorrichtung 12 sind in Fig. 6 bis 9 jeweils längenverstellbar ausgeführt und können hydraulisch angesteuert werden.

In Fig. 6 wird die Kopplungsvorrichtung 12 derart angesteuert, dass die Zugkraft des gezogenen Arbeitsgeräts 72 auf den Traktor 70 im Zugpunkt 76 wirkt, was mit dem Pfeil 78 angedeutet ist. In Fig. 7 wird die Kopplungsvorrichtung 12 derart angesteuert, dass die Zugkraft des gezogenen Arbeitsgeräts 72 auf den Traktor 70 im Zugpunkt 76 wirkt, der in diesem Fall zur Traktorlängsachse seitlich versetzt angeordnet ist. Auch hier ist die Kraftrichtung mit dem Pfeil 78 angedeutet. Durch eine Verlagerung des Zugpunkts 76 kann in vorteilhafter Weise die Fahreigenschaft des Gespanns verbessert werden, insbesondere die Krafteinleitung zwischen Traktor und Arbeitsgerät bei einer Kurvenfahrt. Es ist möglich, den Traktor bei der Kurvenfahrt zu unterstützen, oder wie in Fig. 7 gezeigt, der Kurvenfahrt durch ein Gegenmoment zum Lenkmoment entgegenzuwirken.

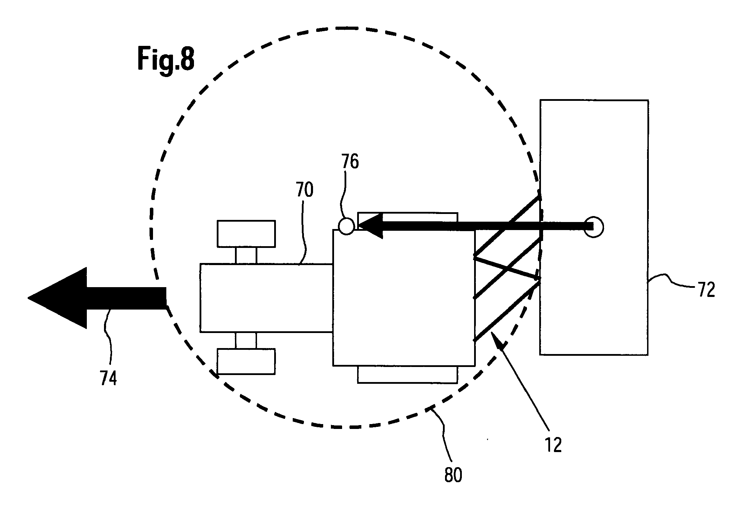

Fig. 8 zeigt in einer schematischen Darstellung ein Gespann, bestehend aus einem Traktor 70 und einem Arbeitsgerät 72 in einer Geradeausfahrt. Hierbei wird die Kopplungsvorrichtung 12 derart angesteuert, dass das Arbeitsgerät 72 bezüglich der Fahrtrichtung 74 zum Traktor 70 seitlich versetzt und um den Zugpunkt 76 frei pendelnd gezogen wird. Ein solcher Betriebsmodus ist insbesondere bei Geräten, die eine pendelnde Anbindung benötigen und spurversetzt zum Traktor geführt werden sollen, vorteilhaft.

In Fig. 6 bis 9 ist gestrichelt der Kreis 80 eingezeichnet, um den die Kopplungsvorrichtung 12 und somit das Arbeitsgerät 72 pendeln bzw. schwenken kann, wenn einzelne längenverstellbare Elemente 18, 20, 22, 24, 26 und 28 in ihrer Länge verstellt werden. Der Kreismittelpunkt des Kreises 80 entspricht hierbei dem Zugpunkt 76.

In Fig. 6 wird die Kopplungsvorrichtung 12 derart angesteuert, dass das Gewicht des gezogenen Arbeitsgeräts 72 auf den Traktor 70 im Zugpunkt 76 wirkt, was mit dem Pfeil 78 angedeutet ist. In Fig. 7 wird die Kopplungsvorrichtung 12 derart angesteuert, dass das Gewicht des gezogenen Arbeitsgeräts 72 auf den Traktor 70 im Zugpunkt 76 wirkt, der in diesem Fall zur Traktorlängsachse seitlich versetzt angeordnet ist. Auch hier ist die Kraftrichtung mit dem Pfeil 78 angedeutet. Durch eine Verlagerung des Zugpunkts 76 kann in vorteilhafter Weise die Fahreigenschaft des Gespanns verbessert werden, insbesondere die Krafteinleitung zwischen Traktor und Arbeitsgerät bei einer Kurvenfahrt. Es ist möglich, den Traktor bei der Kurvenfahrt zu unterstützen, oder wie in Fig. 7 gezeigt, der Kurvenfahrt durch ein Gegenmoment zum Lenkmoment entgegenzuwirken.

Fig. 8 zeigt in einer schematischen Darstellung ein Gespann, bestehend aus einem Traktor 70 und einem Arbeitsgerät 72 in einer Geradeausfahrt. Hierbei wird die Kopplungsvorrichtung 12 derart angesteuert, dass das Arbeitsgerät 72 bezüglich der Fahrtrichtung 74 zum Traktor 70 seitlich versetzt und um den Zugpunkt 76 frei pendelnd gezogen wird. Ein solcher Betriebsmodus ist insbesondere bei Geräten, die eine pendelnde Anbindung benötigen und spurversetzt zum Traktor geführt werden sollen, vorteilhaft.

In Fig. 6 bis 9 ist gestrichelt der Kreis 80 eingezeichnet, um den die Kopplungsvorrichtung 12 und somit das Arbeitsgerät 72 pendeln bzw. schwenken kann, wenn einzelne längenverstellbaren Elemente 18, 20, 22, 24, 26 und 28 in ihrer Länge verstellt werden. Der Kreismittelpunkt des Kreises 80 entspricht hierbei dem Zugpunkt 76.

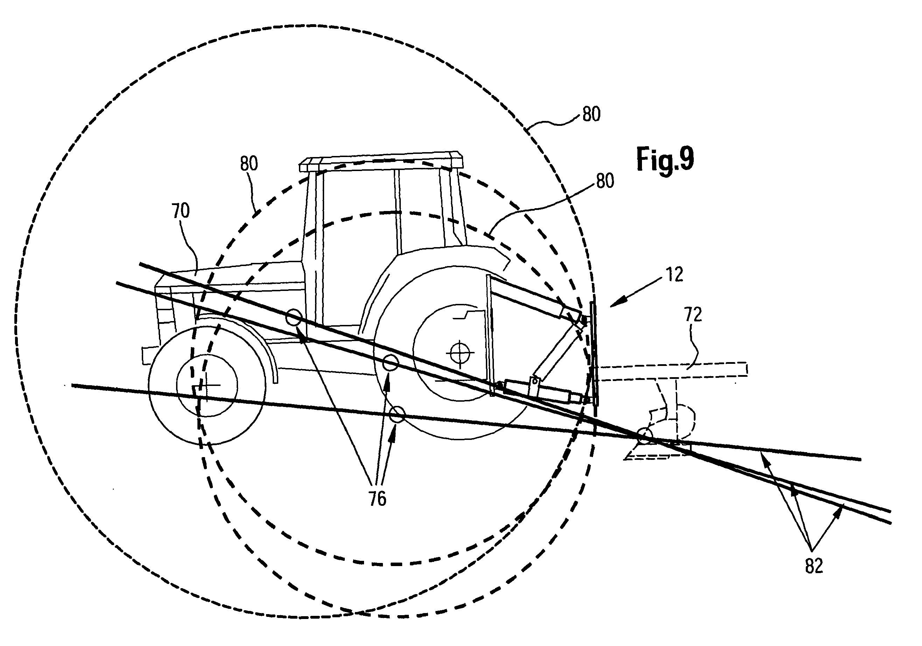

Fig. 9 zeigt in einer schematischen Darstellung eine seitliche Ansicht eines Traktors 70, an den über eine Kopplungsvorrichtung 12 ein in Form eines Pflugs ausgebildetes Arbeitsgerät 72 adaptiert ist. Durch entsprechende Ansteuerung der längenverstellbaren Elemente 18, 20, 22, 24, 26 und 28 der Kopplungsvorrichtung 12 kann die Kreisbahn, auf der das Gerät vertikal pendelt, verändert werden. Hierdurch lässt sich der auf den Traktor 70 wirkende Zugpunkt 76 in seiner vertikalen Position relativ zum Traktor 70 verändern. Weiterhin kann der Zugpunkt 76 auch entlang der Traktorlängsachse verlagert werden, was mit dem links oben angeordneten Zugpunkt 76 angedeutet ist. Die mit dem Bezugszeichen 82 gekennzeichneten Geraden stellen die Wirklinien der resultierenden Pflugkraft auf den Traktor 70 dar. Der mit der Kopplungsvorrichtung 12 an den Traktor 70 gekoppelte Pflug kann in der Tiefe über die Kopplungsvorrichtung 12 geregelt werden, obwohl er frei pendelnd gefahren wird.

Vorteilhaft ist die Tatsache, dass die erfindungsgemäße Kopplungsvorrichtung 12 das Gewicht des Arbeitsgeräts 72 auf den Traktor 70 übertragen kann, ohne hierbei die Schwimmstellung aufzuheben. Hierdurch ist es unter anderem möglich, dass das Arbeitsgerät 72 und der Traktor 70 sich relativ zueinander um die Traktorlängsachse drehen können. Weiterhin ist eine Konvergenz der Unterlenker und des Oberlenkers grundsätzlich nicht erforderlich, um einen Schnittpunkt, durch den die Wirklinie der Resultierenden verläuft, zu erzeugen.

## Patentansprüche

1. Vorrichtung zur Kopplung eines Arbeitsgeräts an ein Arbeitsfahrzeug, mit einem Kopplungsrahmen (14) zur Befestigung des Arbeitsgeräts (72), zwei Unterlenkern (24, 26), einem längenverstellbaren Oberlenker (18) und zwei Hubelementen (20, 22), wobei die Unterlenker (24, 26) und der Oberlenker (18) jeweils mit einem Ende an dem Arbeitsfahrzeug (70) gelenkig anbringbar sind und jeweils mit dem anderen Ende an dem Kopplungsrahmen (14) gelenkig angebracht sind, wobei der Oberlenker (18) im Wesentlichen mittig im oberen Bereich des Kopplungsrahmens (14) angeordnet ist, wobei die beiden Unterlenker (24, 26) im Wesentlichen seitlich im unteren Bereich des Kopplungsrahmens (14) angeordnet sind, und wobei die Hubelemente (20, 22) jeweils mit einem Ende an einem der Unterlenker (24, 26) gelenkig angebracht sind, **dadurch gekennzeichnet, dass** die Hubelemente (20, 22) jeweils mit dem anderen Ende im Wesentlichen seitlich in einem oberen Bereich des Kopplungsrahmens (14) gelenkig angebracht sind.

2. Vorrichtung nach Anspruch 1, **dadurch gekennzeichnet, dass** die Hubelemente (20, 22) im Wesentlichen im mittleren oder vorderen Bereich der Unterlenker (24, 26) angebracht sind.

3. Vorrichtung nach Anspruch 1 oder 2, **dadurch gekennzeichnet, dass** die Hubelemente (20, 22) über eine Hebelarmkonstruktion am Kopplungsrahmen (14) angebracht sind.

4. Vorrichtung nach einem der Ansprüche 1 bis 3, **dadurch gekennzeichnet, dass** die Hubelemente (20, 22) längenverstellbar ausgebildet sind.

5. Vorrichtung nach einem der Ansprüche 1 bis 4, **dadurch gekennzeichnet, dass** der Kopplungsrahmen (14) eine Adaptionsschnittstelle für ein Arbeitsgerät (72) aufweist, wobei die Adaptionsschnittstelle vorzugsweise Kopplungsmittel (16) zur Befestigung des Arbeitsgeräts (72) aufweist.

6. Vorrichtung nach einem der Ansprüche 1 bis 5, **dadurch gekennzeichnet, dass** die Unterlenker (24, 26) und der Oberlenker (18) unmittelbar an einem Achsgehäuse (10) des Arbeitsfahrzeugs (70) oder an einer am Arbeitsfahrzeug (70) angeordneten Rahmenkonstruktion anbringbar sind, wobei die Rahmenkonstruktion vorzugsweise abnehmbar ausgebildet ist.

7. Vorrichtung nach einem der Ansprüche 1 bis 6, **dadurch gekennzeichnet, dass** die Unterlenker (24, 26) längenverstellbar ausgebildet sind.

8. Vorrichtung nach einem der Ansprüche 1 bis 7, **dadurch gekennzeichnet, dass** ein längenverstellbares Querlenkerelement (28) vorgesehen ist, das mit seinem einen Ende an dem einen Unterlenker (26) und mit seinem anderen Ende an dem anderen Unterlenker (24) angelenkt ist.

9. Vorrichtung nach einem der Ansprüche 1 bis 8, **dadurch gekennzeichnet, dass** ein längenverstellbares Querlenkerelement (28) vorgesehen ist, das mit seinem einen Ende an dem Kopplungsrahmen (14) und mit seinem anderen Ende an einem der beiden Unterlenker (24, 26) angelenkt ist.

10. Vorrichtung nach Anspruch 8 oder 9, **dadurch gekennzeichnet, dass** ein Ende des Querlenkerelements (28) örtlich mit einem Ende einer der Unterlenker (24, 26) zusammenfällt oder geringfügig davon beabstandet angeordnet ist.

11. Vorrichtung nach Anspruch 9 oder 10, **dadurch gekennzeichnet, dass** das Querlenkerelement (28) und die beiden Unterlenker (24, 26) derart angeordnet sind, dass diese eine geschlossene kinematische Kette bilden.

12. Vorrichtung nach einem der Ansprüche 8 bis 11, **dadurch gekennzeichnet, dass** ein am Unterlenker (26) angelenktes Ende des Querlenkerelements (28) örtlich mit einem am Unterlenker (26) angelenkten Ende eines der Hubelemente (22) zusammenfällt oder geringfügig davon beabstandet angeordnet ist.

13. Vorrichtung nach einem der Ansprüche 1 bis 11, **dadurch gekennzeichnet, dass** die beiden Unterlenker (24, 26) und/oder die Hubelemente (20, 22) im Wesentlichen parallel, konvergierend oder v-förmig zueinander angeordnet sind.

14. Vorrichtung nach einem der Ansprüche 1 bis 13, **dadurch gekennzeichnet, dass** ein längenverstellbares Element (18, 20, 22, 28) einen Zylinder aufweist, wobei der Zylinder vorzugsweise hydraulisch ansteuerbar und/oder doppelt wirkend ausgebildet ist.

15. Vorrichtung nach einem der Ansprüche 1 bis 14, **dadurch gekennzeichnet, dass** durch Drucklosschaltung des längenverstellbaren Querlenkerelements (28) eine Pendelbewegung zwischen dem Arbeitsfahrzeug (70) und dem Arbeitsgerät (72) realisierbar ist.

16. Vorrichtung nach einem der Ansprüche 1 bis 15, **dadurch gekennzeichnet, dass** durch Drucklosschaltung des längenverstellbaren Oberlenkers (18) eine Verkippung zwischen dem Arbeitsfahrzeug (70) und dem Arbeitsgerät (72) realisierbar ist.

17. Vorrichtung nach einem der Ansprüche 1 bis 16, **dadurch gekennzeichnet, dass** durch Drucklosschaltung der Hubelemente (20, 22) eine Aufnahme von Stützlasten und/oder eine Verdrehung zwischen dem Arbeitsfahrzeug (70) und dem Arbeitsgerät (72) um die Arbeitsfahrzeuglängsachse realisierbar ist.

## Claims

1. Device for coupling a working implement to a working vehicle, comprising a coupling frame (14) for fastening the working implement (72), two lower links (24, 26), a length-adjustable upper link (18) and two lifting elements (20, 22), wherein the lower links (24, 26) and the upper link (18) can each be articulatedly mounted by one end to the working vehicle (70) and are each articulatedly mounted by the other end to the coupling frame (14), wherein the upper link (18) is arranged substantially centrally in the upper region of the coupling frame (14), wherein the two lower links (24, 26) are arranged substantially laterally in the lower region of the coupling frame (14), and wherein the lifting elements (20, 22) are each articulatedly mounted by one end to one of the lower links (24, 26), **characterized in that** the lifting elements (20, 22) are each articulatedly mounted by the other end substantially laterally in an upper region of the coupling frame (14).

2. Device according to Claim 1, **characterized in that** the lifting elements (20, 22) are mounted substantially in the central or front region of the lower links (24, 26).

3. Device according to Claim 1 or 2, **characterized in that** the lifting elements (20, 22) are mounted on the coupling frame (14) via a lever arm construction.

4. Device according to one of Claims 1 to 3, **characterized in that** the lifting elements (20, 22) are designed to be length-adjustable.

5. Device according to one of Claims 1 to 4, **characterized in that** the coupling frame (14) has an adaptation interface for a working implement (72), wherein the adaptation interface preferably has coupling means (16) for fastening the working implement (72).

6. Device according to one of Claims 1 to 5, **characterized in that** the lower links (24, 26) and the upper link (18) can be mounted directly on an axle housing (10) of the working vehicle (70) or on a frame construction arranged on the working vehicle (70), wherein the frame construction is preferably designed to be removable.

7. Device according to one of Claims 1 to 6, **characterized in that** the lower links (24, 26) are designed to be length-adjustable.

8. Device according to one of Claims 1 to 7, **characterized in that** a length-adjustable transverse link element (28) is provided which is articulated by its one end on one lower link (26) and by its other end on the other lower link (24).

9. Device according to one of Claims 1 to 8, **characterized in that** a length-adjustable transverse link element (28) is provided which is articulated by its one end on the coupling frame (14) and by its other end on one of the two lower links (24, 26).

10. Device according to Claim 8 or 9, **characterized in that** one end of the transverse link element (28) coincides locally with one end of one of the lower links (24, 26) or is arranged at a slight spacing therefrom.

11. Device according to Claim 9 or 10, **characterized in that** the transverse link element (28) and the two lower links (24, 26) are arranged in such a way that they form a closed kinematic chain.

12. Device according to one of Claims 8 or 11, **characterized in that** one end of the transverse link element (28) articulated on the lower link (26) coincides locally with an end of one of the lifting elements (22) articulated on the lower link (26) or is arranged at a slight spacing therefrom.

13. Device according to one of Claims 1 to 11, **characterized in that** the two lower links (24, 26) and/or the lifting elements (20, 22) are arranged substantially parallel, in a convergent or v-shaped manner to one another.

14. Device according to one of Claims 1 to 13, **characterized in that** a length-adjustable element (18, 20, 22, 28) has a cylinder, wherein the cylinder is preferably hydraulically controllable and/or designed to be double-acting.

15. Device according to one of Claims 1 to 14, **characterized in that**, by depressurization of the length-adjustable transverse link element (28), a swinging movement between the working vehicle (70) and the working implement (72) can be achieved.

16. Device according to one of Claims 1 to 15, **characterized in that**, by depressurization of the length-adjustable upper link (18), a tilting between the working vehicle (70) and the working implement (72) can be achieved.

17. Device according to one of Claims 1 to 16, **characterized in that**, by depressurization of the lifting elements (20, 22), the bearing of supported loads and/or a rotation between the working vehicle (70) and the working implement (72) about the working vehicle longitudinal axis can be achieved.

## Revendications

1. Dispositif pour coupler un appareil de travail à un véhicule de travail, comprenant un cadre d'accouplement (14) pour la fixation de l'appareil de travail (72), deux bras oscillants inférieurs (24, 26), un bras oscillant supérieur (18) réglable en longueur et deux éléments de levage (20, 22), les bras oscillants inférieurs (24, 26) et le bras oscillant supérieur (18) pouvant être placés à chaque fois de façon articulée par une extrémité sur le véhicule de travail (70) et étant placés à chaque fois de façon articulée par l'autre extrémité sur le cadre d'accouplement (14), le bras oscillant supérieur (18) étant disposé principalement au centre dans la zone supérieure du cadre d'accouplement (14), les deux bras oscillants inférieurs (24, 26) étant disposés principalement sur le côté dans la zone inférieure du cadre d'accouplement (14), et les éléments de levage (20, 22) étant placés à chaque fois de façon articulée par une extrémité sur l'un des bras oscillants inférieurs (24, 26), **caractérisé en ce que** les éléments de levage (20, 22) sont placés à chaque fois de façon articulée par l'autre extrémité principalement sur le côté dans une zone supérieure du cadre d'accouplement (14).

2. Dispositif selon la revendication 1, **caractérisé en ce que** les éléments de levage (20, 22) sont placés essentiellement dans la zone centrale ou la zone avant des bras oscillants inférieurs (24, 26).

3. Dispositif selon la revendication 1 ou 2, **caractérisé en ce que** les éléments de levage (20, 22) sont placés au moyen d'une construction de bras de levier sur le cadre d'accouplement (14).

4. Dispositif selon l'une quelconque des revendications 1 à 3, **caractérisé en ce que** les éléments de levage (20, 22) sont conçus de manière réglable en longueur.

5. Dispositif selon l'une quelconque des revendications 1 à 4, **caractérisé en ce que** le cadre d'accouplement (14) présente une interface d'adaptation pour un appareil de travail (72), l'interface d'adaptation présentant de préférence des moyens d'accouplement (16) pour la fixation de l'appareil de travail (72).

6. Dispositif selon l'une quelconque des revendications 1 à 5, **caractérisé en ce que** les bras oscillants inférieurs (24, 26) et le bras oscillant supérieur (18) peuvent être placés directement sur un boîtier d'axe (10) du véhicule de travail (70) ou sur une construction de cadre disposée sur le véhicule de travail (70), la construction de cadre étant réalisée de préférence de manière amovible.

7. Dispositif selon l'une quelconque des revendications 1 à 6, **caractérisé en ce que** les bras oscillants inférieurs (24, 26) sont conçus de manière réglable en longueur.

8. Dispositif selon l'une quelconque des revendications 1 à 7, **caractérisé en ce qu'**un élément de bras oscillant transversal (28) réglable en longueur est prévu, qui est articulé par l'une de ses extrémités sur l'un des bras oscillants inférieurs (26) et par son autre extrémité sur l'autre bras oscillant inférieur (24).

9. Dispositif selon l'une quelconque des revendications 1 à 8, **caractérisé en ce qu'**un élément de bras oscillant transversal (28) réglable en longueur est prévu, qui est articulé par l'une de ses extrémités sur le cadre d'accouplement (14) et par son autre extrémité sur l'un des deux bras oscillants inférieurs (24, 26).

10. Dispositif selon la revendication 8 ou 9, **caractérisé en ce qu'**une extrémité de l'élément de bras oscillant transversal (28) coïncide localement avec une extrémité de l'un des bras oscillants inférieurs (24, 26) ou est disposée légèrement à distance de celle-ci.

11. Dispositif selon la revendication 9 ou 10, **caractérisé en ce que** l'élément de bras oscillant transversal (28) et les deux bras oscillants inférieurs (24, 26) sont disposés de telle sorte que ces bras forment une chaîne cinématique fermée.

12. Dispositif selon l'une quelconque des revendications 8 à 11, **caractérisé en ce qu'**une extrémité, articulée sur le bras oscillant inférieur (26), de l'élément de bras oscillant transversal (28) coïncide localement avec une extrémité, articulée sur le bras oscillant inférieur (26), de l'un des éléments de levage (22) ou est disposée légèrement à distance de celle-ci.

13. Dispositif selon l'une quelconque des revendications 1 à 11, **caractérisé en ce que** les deux bras oscillants inférieurs (24, 26) et/ou les éléments de levage (20, 22) sont disposés sensiblement en parallèle, de façon convergente ou en forme de v les uns par rapport aux autres.

14. Dispositif selon l'une quelconque des revendications 1 à 13, **caractérisé en ce qu'**un élément (18, 20, 22, 28) réglable en longueur présente un cylindre, le cylindre étant conçu de préférence de manière à pouvoir être actionné hydrauliquement et/ou avec un double effet.

15. Dispositif selon l'une quelconque des revendications 1 à 14, **caractérisé en ce qu'**un mouvement pendulaire entre le véhicule de travail (70) et l'appareil de travail (72) peut être réalisé par un montage sans pression de l'élément de bras oscillant transversal (28) réglable en longueur.

16. Dispositif selon l'une quelconque des revendications 1 à 15, **caractérisé en ce qu'**un basculement entre le véhicule de travail (70) et l'appareil de travail (72) peut être réalisé par un montage sans pression du bras oscillant supérieur (18) réglable en longueur.

17. Dispositif selon l'une quelconque des revendications 1 à 16, **caractérisé en ce qu'**un logement de charges d'appui et/ou une torsion entre le véhicule de travail (70) et l'appareil de travail (72) autour de l'axe longitudinal du véhicule de travail peut être réalisé par un montage sans pression des éléments de levage (20, 22).
